# EUROPEAN PATENT APPLICATION

(11) **EP 3 489 844 A1**
(43) Date of publication of application: **29.05.2019**
(21) Application number: 17203645.1
(22) Date of filing: 24.11.2017
(51) Int. Cl.: G06F 17/30

(54) **PROVISION OF CONTEXT AFILLIATION INFORMATION RELATED TO A PLAYED SONG**

(71) Applicant: Spotify AB, 111 53 Stockholm (SE)
(72) Inventor: EDLING, Göran, 113 56 Stockholm (SE)
(74) Representative: Ström & Gulliksson AB

(57) **Abstract**

This disclosure generally relates to the provision of context affiliation information such as playlist information (e.g., playlist feedback) related to a song to an electronic device, such as a portable communication device. In some embodiments described herein, a song ID is obtained. Furthermore, a time stamp associated with the obtained song ID is obtained. A storage is browsed utilizing the obtained song ID as well as the obtained time stamp in order to locate a matching item having a corresponding song ID and a corresponding time stamp. In response to locating a matching item, a playlist ID associated with the located matched item may be determined, e.g. from a database or list of known playlist ID's contained in the storage. The playlist ID is indicative of a playlist related to the located matched item. Furthermore, the determined playlist ID can be communicated (e.g., transmitted) to the electronic device for enabling subsequent presentation by the electronic device of information related to the playlist.

## Description

### TECHNICAL FIELD

The present disclosure generally relates to the provision of media content, such as streaming of media content (e.g., music).

In particular, the various embodiments described in this disclosure relates to the provision of context affiliation information (e.g., context affiliation feedback) related to a song that has been played or is currently being played.

### BACKGROUND

As computer technology has improved, the digital media industry has evolved greatly in recent years. Users are able to use electronic devices such as portable communication devices (e.g., cellular telephones, mobile telephones, smart phones, tablet computers, etc.) to consume media content (e.g., music, videos and other forms of media content). For instance, users can listen to audio content (e.g., music) and/or watch video content (e.g., movies, television (TV) broadcasts, etc.) on a variety of electronic devices.

At the same time, advances in network technology have increased the speed and reliability with which information can be communicated over computer networks. It is therefore possible for users to stream media content over computer networks as needed, or on demand, rather than transmitting a complete file in physical media (such as CD or DVD, or downloading the entire file) before consuming the media content.

As people turn to their portable electronic devices as their primary means of playing music or other media content, there has been a demand for location contextualization (e.g., *'I'm here and this is what I'm listening to'*). In order to meet this demand, the European Patent Application EP 3 074 943 suggests techniques for providing contextualization by location. In more detail, EP 3 074 943 suggests a system and a method for locating and notifying a user of the music or other audio metadata matching a user's stated preference by appending location information to such metadata. When reducing the teachings of EP 3 074 943 into practice, a user is thus enabled to know what is being played, where it is being played, by whom and when it is being played. EP 3 074 943 therefore provides an improvement over earlier-existing location based systems in that the system thereof allows for a location-based and preference-based system that can match the specific expressed music or other audio interests and preferences of a user.

### SUMMARY

It is in view of the above considerations and others that the various aspects and embodiments disclosed herein have been made.

Despite the advances in technology, music or other media content have not been contextualized by context affiliation in any significant manner. For example, during playback of a song at a portable communication device or at a loudspeaker device a user may want to know the context affiliation related to the currently played song. As a mere example, the user may want to know from which playlist the currently played song is being played.

In view of the above, it is therefore a general object of the aspects and embodiments described throughout this disclosure to allow for a solution, which provides context affiliation information (e.g., feedback) related to a song to an electronic device.

This general object has been addressed by the appended independent claims. Advantageous embodiments are defined in the appended dependent claims.

According to a first aspect, this disclosure presents a method of providing context affiliation information related to a song to an electronic device. The method is advantageously, but not necessarily, performed by or otherwise executed in a computer server system comprising one or several computers.

A song identification (ID) is obtained. A time stamp associated with the song ID is also obtained. The time stamp is indicative of a time when a song having the obtained song ID was played or is being played. Furthermore, a storage (e.g., memory) is browsed, utilizing the obtained song ID as well as the obtained time stamp, in order to locate a matching item having a corresponding song ID and a corresponding time stamp. In response to locating or otherwise finding a matching item, a context affiliation ID associated with the located matched item is determined. The context affiliation ID is indicative of a context affiliation related to the located matched item. Thereafter, the determined context affiliation ID may be communicated (e.g., transmitted) to said electronic device for enabling subsequent presentation by the electronic device of information related to the context affiliation.

In a preferred embodiment, the context affiliation ID includes a playlist ID which is indicative of a playlist associated with the located matched item.

The time stamp may include at least one of a starting time and an ending time. That is, the time stamp may include either of or both of the starting time and the ending time.

Typically, the starting time is indicative of the timing when the song associated with the obtained song ID started. Also, the ending time is typically indicative of the timing when the song associated with the obtained song ID ended or otherwise ceased to be played.

In some embodiments, the method additionally comprises obtaining location information indicative of the location where the song having the obtained song ID and the obtained time stamp was played or is being played; and the browsing of the storage additionally includes utilizing the obtained location information to locate the matching item.

In one embodiment, the method further comprises receiving a first data message from the electronic device, the first data message comprising the song ID and the time stamp associated with the song ID; wherein obtaining the song ID includes retrieving the song ID from the received first data message; and wherein obtaining the time stamp associated with the song ID includes retrieving the time stamp from the received first data message.

In one embodiment, the method further comprises receiving a second data message from the electronic device, the second data message including an instruction requesting the computer server system to return context affiliation information associated with a selected song to the electronic device. Alternatively, the method may further comprise receiving a second data message from the electronic device, the second data message including an instruction requesting the computer server system to return context affiliation information associated with a currently played song to the electronic device.

In another embodiment, the method additionally comprises receiving a third data message from the electronic device, the third data message comprising the song ID, the time stamp associated with the song ID and an instruction requesting the computer server system to return context affiliation information associated with a selected song or a currently played song being associated with the song ID to the electronic device; wherein obtaining the song ID includes retrieving the song ID from the received third data message; and obtaining the time stamp associated with the song ID includes retrieving the time stamp from the received third data message.

In a second of its aspects, the present disclosure presents computer program, comprising instructions which, when executed on at least one processor, cause the at least one processor to carry out the method according to the first aspect described hereinabove.

In a third of its aspects, the present disclosure presents a carrier comprising the computer program according to the second aspect. The carrier may for example be one of an electronic signal, an optical signal, a radio signal or computer-readable storage medium.

In a fourth of its aspects, the present disclosure presents a computer server system. The computer server system is configured to perform or otherwise execute the method according to the first aspect described hereinabove. For example, the computer server system may comprise at least one communications interface for communicating data messages to/from the computer server system; at least one processor; and at least one memory comprising instructions which, when executed on the at least one processor, cause the at least one processor to carry out the method according to the first aspect.

In a fifth of its aspect, the present disclosure presents a method of receiving context affiliation information related to a song. The method is advantageously, but not necessarily, performed by or otherwise executed in an electronic device (e.g., a portable communication device).

A context affiliation ID is obtained. For example, the context affiliation ID may be received from a computer server system. The context affiliation ID is indicative of a context affiliation related to a song.

In a preferred embodiment, the context affiliation ID includes a playlist ID being indicative of a playlist associated with the song.

In some embodiments, location information indicative of a location where said song was played or is being played can be communicated (e.g., transmitted) to the computer server system.

In some embodiments, the method further comprises transmitting a first data message to the computer server system, the first data message comprising a song ID and a time stamp associated with the song ID. The time stamp is typically indicative of a time when a song having the song ID was played or is being played. The time stamp may include at least one of a starting time and an ending time. That is, the time stamp may include either of or both of the starting time and the ending time. Typically, the starting time is indicative of the timing when the song associated with the obtained song ID started. Also, the ending time is typically indicative of the timing when the song associated with the obtained song ID ended or otherwise ceased to be played.

Additionally, the method may comprise communicating (e.g., transmitting) a second data message to the computer server system, the second data message including an instruction requesting the computer server system to return context affiliation information associated with a selected song to the electronic device. Alternatively, the method may comprise communicating (e.g., transmitting) a second data message to the computer server system, the second data message including an instruction requesting the computer server system to return context affiliation information associated with a currently played song to the electronic device. In other embodiments, the method may further comprise communicating (e.g., transmitting) a third data message to the computer system, the third data message comprising a song ID, a time stamp associated with the song ID and an instruction requesting the computer server system to return context affiliation information associated with a selected song or a currently played song being associated with the song ID.

In a sixth of its aspects, the present disclosure presents computer program, comprising instructions which, when executed on at least one processor, cause the at least one processor to carry out the method according to the fifth aspect described hereinabove.

In a seventh of its aspects, the present disclosure presents a carrier comprising the computer program according to the sixth aspect. The carrier may for example be one of an electronic signal, an optical signal, a radio signal or computer-readable storage medium.

In an eighth of its aspects, the present disclosure presents an electronic device configured to perform or otherwise execute the method according to the fifth aspect. For example, the electronic device (e.g., a portable electronic device) may comprise at least one communications interface for communicating data messages to/from the electronic device; at least one processor; and at least one memory comprising instructions which, when executed on the at least one processor, cause the at least one processor to carry out the method according to the fifth aspect.

Various aspects and embodiments described herein enable a novel user experience when consuming media content, for example when consuming streamed music.

In particular, various aspects and embodiments described herein allows for the provision of context affiliation information (e.g., feedback) related to a song to an electronic device. For example, during playback of a song at a portable communication device or at a loudspeaker device a user may want to know the context affiliation related to the currently played song. As a mere example, certain embodiments described herein enable a user to obtain or otherwise receive information (e.g., feedback) about a playlist from which a currently played song is being played.

### BRIEF DESCRIPTION OF DRAWINGS

These and other aspects, features and advantages will be apparent and elucidated from the following description of various embodiments, reference being made to the accompanying drawings, in which:
Fig. 1 illustrates a client-server environment for playback of streamed media content;
Fig. 2 illustrates a flowchart of a method in accordance with an aspect of this disclosure;
Figs. 3A-3B illustrate flowchart of method in accordance with different embodiments;
Fig. 4 illustrates a flowchart of a method in accordance with another aspect of this disclosure;
Fig. 5 illustrates a carrier containing a computer program, in accordance with an embodiment;
Fig. 6 illustrates a carrier containing a computer program, in accordance with another embodiment;
Fig. 7 illustrates an example implementation of an embodiment of a computer server system in Fig. 1; and
Fig. 8 illustrates an example implementation of an embodiment of an electronic device in Fig. 1.

### DETAILED DESCRIPTION

The present invention will now be described more fully hereinafter. The invention may, however, be embodied in many different forms and should not be construed as limited to the embodiments set forth herein; rather, these embodiments are provided by way of example so that this disclosure will be thorough and complete, and will fully convey the scope of the invention to those persons skilled in the art. Like reference numbers refer to like elements or method steps throughout the description.

As described earlier herein, some existing solutions for streaming of media content may be inadequate. It is a general object of the embodiments described herein to enable a novel user experience when consuming media content, such as streamed media content (e.g., music). More particularly, some aspects and embodiments disclosed herein therefore address how to allow for the provision of context affiliation information related to a song to an electronic device.

To address this, in accordance with an embodiment, described herein is a method of providing context affiliation information related to a song to an electronic device. For example, the method may be performed or otherwise executed by a computer server system. The computer server system may include one single computer. Alternatively, the computer server system may comprise several computers. As will be appreciated, if the computer server system comprises several computers, the various actions or method steps of the method may be performed by or executed in the different several computers in a distributed manner. A song ID is obtained. Furthermore, a time stamp associated with the obtained song ID is obtained. The time stamp is indicative of a time when a song having the obtained song ID was played or is being played. A storage (e.g. memory) is browsed utilizing the obtained song ID as well as the obtained time stamp. This is done in order to locate a matching item having a corresponding song ID and a corresponding time stamp. In response to locating a matching item a context affiliation ID associated with the located matched item can be determined, e.g. from a database or list of known context affiliation ID's contained in the storage. The context affiliation ID is indicative of a context affiliation related to the located matched item. Furthermore, the determined context affiliation ID can be communicated (e.g., transmitted) to the electronic device for enabling subsequent presentation by the electronic device of information related to the context affiliation.

By identifying a song and an associated time stamp, it is made possible to identify a corresponding contextual affiliation ID indicative of a contextual affiliation (e.g., a playlist from which a song having a certain song ID was or is being played) with relatively high accuracy. Furthermore, communicating an identified context affiliation ID to the electronic device provides for a novel user experience where a user of the electronic device can obtain or otherwise receive contextual affiliation information (e.g., feedback) related to a selected or currently played song. For example, the user of an electronic device may receive information (e.g., feedback) such as playlist information related to a selected or currently played song. As one example, during playback of a song at a portable communication device or at a loudspeaker device a user can be informed about the context affiliation (e.g., playlist origin) related to the currently played song.

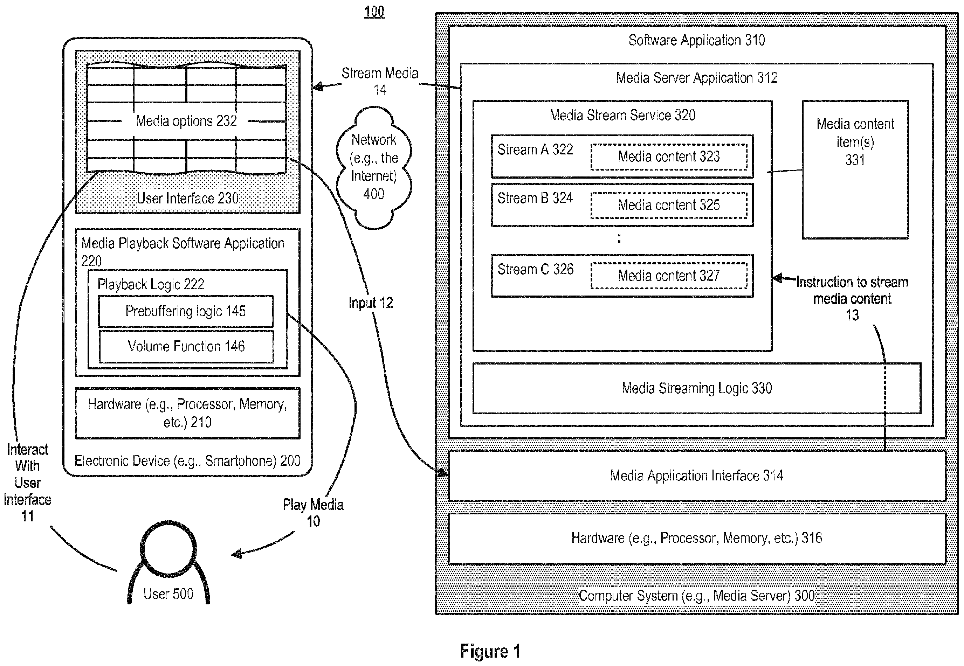

Reference is now made to the figures, where Fig. 1 illustrates an example environment where embodiments of the present invention may be applied. The description in connection with Fig. 1 is intended to introduce a possible environment where embodiments of the present invention may be reduced to practice.

With continued reference to Fig. 1, an example client-server environment 100 for playback of media content will therefore now be described in further detail. The client-server environment 100 may include an electronic device 200 and a computer server system 300, e.g. operating as a media server system. As described earlier, the computer server system 300 may comprise one single computer or several computers. The electronic device 200 may be communicatively connectable to the computer server system 300 via a network 400, such as the Internet. As can be seen in Fig. 1, only a single electronic device 200 and a single computer server system 300 are shown. However, the computer server system 300 may support the simultaneous use of multiple electronic devices, and/or the electronic device 200 can simultaneously access media content at multiple computer server systems.

As shown in Figure 1, the electronic device 200 may be used for the playback of media content here exemplified by audio content such as music, which is provided by the computer server system 300. The electronic device 200 may be a portable communication device. The portable communication device 200 may be embodied as a mobile telephone such as a smartphone. Alternatively, the portable communication device 200 may be embodied as a tablet computer. In yet other embodiments, the electronic device 200 may be any other electronic device capable of playback of media content such as, for example, one of the electronic devices of the following group: a personal computer, a laptop, and a mobile electronic device (e.g. a handheld entertainment device, a digital media player, or other media device).

The electronic device 200 may include one or several physical computer resources, or hardware resources 210. The hardware resources 210 may e.g. include one or several processors (or, processing circuitry), a communications interface (or, communication circuitry) and one or several memories. In some embodiments, the hardware resources 210 may additionally include location-determination hardware, such as a location-determining device (e.g., a Global Positioning System (GPS) device) or the like.

In a similar manner, the computer server system 300 may include one or several physical computer resources, or hardware resources 316. The hardware resources 316 may likewise include e.g. one or several processors (or, processing circuitry), a communications interface (or, communication circuitry) and one or several memories. T

The computer server system 300 may include an operating system or other processing system which supports execution of a software application 310, including a media server application 312 which may be used, for example, to stream media content such as audio content (e.g., music). A media stream service 320 may be used to buffer media content, for streaming to one or more media streams 322, 324, 326. A media application interface 314 may receive requests from electronic devices 200 or other systems, to retrieve media content 331 from the computer system 300.

Media content 331, or media content items, may be provided, for example, within a storage such as a memory (e.g., including a database), or may be received by the computer server system 300 from another source (not shown). This another source (not shown) could be external to the computer system 300, i.e. it may be located remotely from the computer server system 300.

A media streaming logic 330 may be used to retrieve or otherwise access the media content 331 in response to requests from electronic devices 200 or other systems, and populate the media stream service with streams 322, 324, 326 of corresponding media content data 323, 325, 327 that may be returned, i.e. streamed, to the requesting electronic device 200.

The electronic device 200 comprises a user interface 230, which may advantageously be adapted to display or otherwise provide a visual array of media options 232, for example as a two-dimensional grid, a list, or other visual format, and determine a user input from user 500. Each media option in the visual array of media options 232 typically, but not necessarily, correspond to a respective media stream 322, 324, 326.

Selecting a particular media option within the visual array 232 may be used, or otherwise interpreted, as a request or instruction to the media server application 312 of the computer server system 300 to stream or otherwise return a corresponding particular media content item. For example, in accordance with some embodiments, the software application 310 at the computer server system 300 may be used to stream or otherwise communicate media content to the electronic device 200, wherein the user interface 230 at the electronic device 200 is adapted to display a plurality of media options that correspond to respective media streams.

In accordance with some embodiments, the electronic device 200 may also include a media playback application 220, together with a playback logic 222, pre-buffering logic 145, and a volume function 145, which may be used to control the playback of media content that is received from the media server application 312, for playback by the electronic device 200, as described in further detail below.

As will be appreciated, the user 500 may interact 11 with the user interface 230 of the electronic device 200 and issue requests (or request messages), for example the playing of media content associated with a selected media option at the electronic device 200. The user's selection of a particular media option may be communicated 12 to the media server application 312, via the media application interface 314. The media server application 312 may then be instructed 13 to stream corresponding media content, including one or more streams of media content data 323, 325, 327, and subsequently stream 14 or otherwise communicate the selected media to the user's electronic device 200. In accordance with some embodiments, pre-buffering requests from the electronic device 200 may also be communicated 12 to the media server application 312 via the media application interface 314. At the electronic device 200, in response to the user's interaction with the user interface 230, the media playback application 220, including the playback logic 222, may play 10 the requested, and thus selected, media content to the user 500.

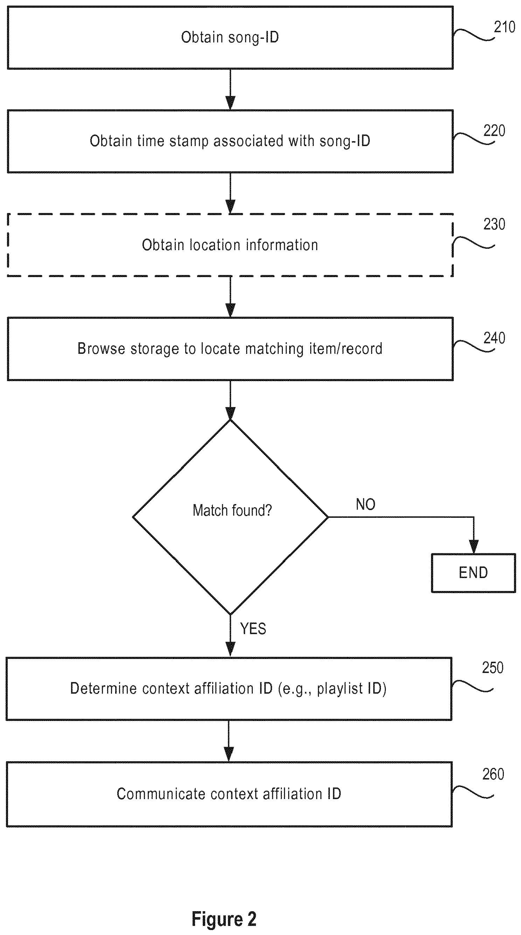

Reference is now made to Fig. 2, which is a flowchart illustrating an aspect of a method of providing context affiliation information related to a song to an electronic device. In advantageous embodiments, the method is performed by, or otherwise implemented in, a computer system 300 (see Fig. 1) including one single computer or several computers as described earlier herein.

Action 210: A song ID is obtained. This song ID uniquely identifies a song having said song ID. In some embodiments, the song ID may be obtained by receiving the song ID from the electronic device 200 (see Fig. 1).

Action 220: A time stamp associated with the obtained song ID is also obtained. The time stamp is indicative of a time when a song having the obtained song ID was played or is being played. The time stamp therefore typically includes at least one of a starting time and an ending time. That is, the time stamp includes either or both of the starting time and the ending time associated with the song having said song ID. In other words, the starting time may be indicative of the timing when the song associated with the obtained song ID started. The ending time may be indicative of the timing when the song associated with the obtained song ID ended, or ceased to be played. In some embodiments, the time stamp may be obtained by receiving the time stamp from the electronic device 200 (see Fig. 1).

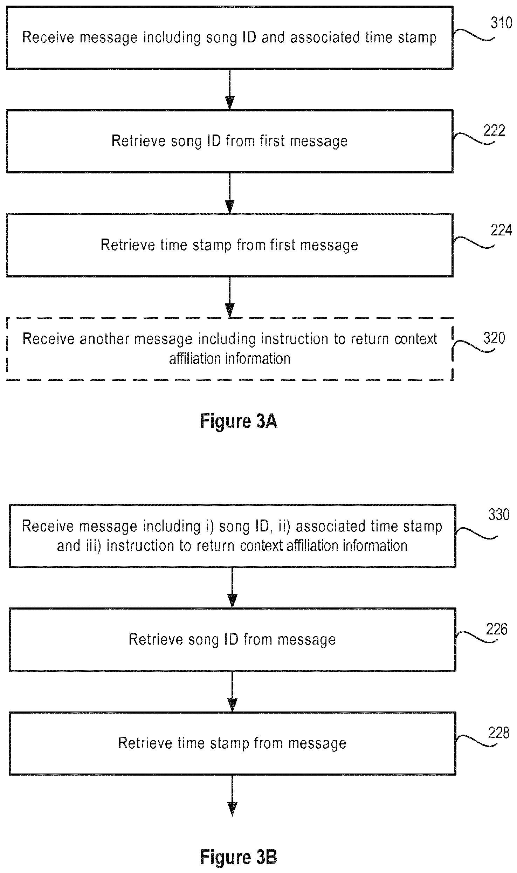

As will be appreciated, various alternatives for obtaining the song ID and/or the time stamp associated with the song ID exist. Figs. 3A-3B illustrate example embodiments where the obtained song ID and the obtained time stamp are received from the electronic device 200 (see Fig. 1). For example, and as schematically illustrated in Fig. 3, a first data message may be received 310 from the electronic device 200 (see Fig. 1). This first data message may comprise the song ID and the time stamp associated with the song ID. The obtaining 220 of the song ID in Fig. 2 may thus include retrieving 222 the song ID from the received first data message, and, likewise, the obtaining of the time stamp associated with the song ID may thus include retrieving 224 the time stamp from the received first data message. Optionally, a second data message may additionally be received 320 from the electronic device 200 (see Fig. 1). For example, the second data message may include an instruction requesting the computer server system 300 to return context affiliation information associated with a selected song to the electronic device 200. Alternatively, the second data message may include an instruction requesting the computer server system 300 to return context affiliation information associated with a currently played song to the electronic device. In an alternative embodiment illustrated in Fig. 3B, a third data message may be received 330 from the electronic device. This third data message may comprises the song ID, the time stamp associated with the song ID and the instruction requesting the computer server system to return (to the electronic device) context affiliation information associated with a selected song or a currently played song being associated with the song ID. Similar to the embodiment described in connection with Fig. 3A, the obtaining 220 of the song ID in Fig. 2 may thus include retrieving 226 the song ID from the received third data message, and, likewise, the obtaining of the time stamp associated with the song ID may thus include retrieving 228 the time stamp from the received third data message. As will be readily appreciated, other embodiments than those example embodiments described in connection with Figs. 3A and 3B are conceivable to realize the obtaining of the song ID and to realize the obtaining of the time stamp associated with the obtained song ID. The embodiments described in connection with Figs. 3A and 3B, respectively, only represent certain example embodiments.

Turning back to Fig. 2, additional actions or method steps will be further detailed in the following discussion.

Action 230: Optionally, location information can be obtained. The location information may be indicative of the location where the song having the obtained song ID and the obtained time stamp was played or is being played. In some embodiments, the location information may be received from the electronic device 200 (See Fig. 1). As a mere example, a fourth data message (now shown) may be received from the electronic device 200. The fourth data message may comprise the location information. The obtaining 230 of the location information may thus comprise retrieving the location information from the thus received fourth data message.

Action 240: A storage (e.g. memory) is browsed utilizing the obtained song ID and the obtained time stamp and optionally also the earlier-mentioned location information. This is done to locate or otherwise finding a matching item or record having a corresponding song ID and a corresponding time stamp within the storage, e.g. in a database or list of known song ID's and corresponding time stamps (and optionally also known locations associated with said known song ID's and said corresponding time stamps) contained within the storage.

Action 250: In response to locating or otherwise finding a matching item or matching record, a context affiliation ID associated with the located matched item can be determined, e.g. from a database or list of known context affiliation ID's contained in the storage. The context affiliation ID is indicative of a context affiliation related to the located matched item or record. In other words, the context affiliation ID may identify a context affiliation associated with the located matching item.

In advantageous embodiments, the context affiliation ID may preferably include a playlist ID indicative of a playlist associated with the matched item. For example, the playlist ID may uniquely identify a playlist from which a selected song or a currently played song is played.

Action 260: The determined context affiliation ID may be communicated (e.g. transmitted) to said electronic device 200 (see Fig. 1) for enabling subsequent presentation by the electronic device 200 of information related to the context affiliation (e.g., playlist information).

In the event no matching item is located, the method may end. Additionally, or alternatively, the method may proceed by communicating (e.g. transmitting) a negative acknowledgement (NACK) data message to the electronic device 200. This may be advantageous in that the user 500 of the electronic device 200 may then receive information (e.g., feedback) related to the failed match.

The various embodiments of the method described in connection with Figs. 2 and 3A-3B allow for a novel way of consuming media content such as streamed media content. In particular, the various embodiments allow for the provision of context affiliation such as playlist information related to a song to an electronic device.

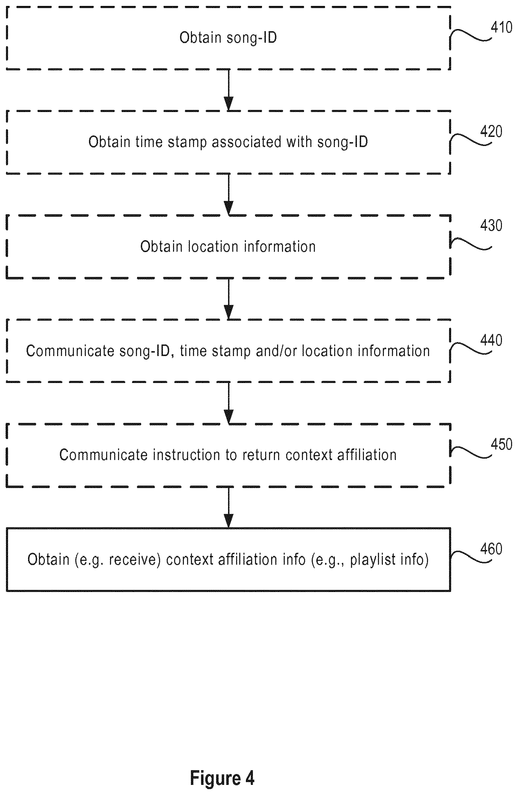

Reference is now made to Fig. 4, which is a flowchart illustrating an aspect of a method of obtaining (e.g., receiving) context affiliation information related to a song. Advantageously, the method is performed by or otherwise executed in an electronic device 200, e.g. a portable communication device such as a mobile telephone or a tablet computer.

Action 410: Optionally, a song ID may be identified. The song ID uniquely identifies the song having said song ID.

There exist various ways of identifying the song ID. In some example embodiments, a selected song is identified by its song ID. The song ID may e.g. be appended as metadata to a selected song. Obtaining the song ID may then include retrieving or otherwise fetching the song ID from the appended metadata. When the obtained song ID is communicated to the computer server system 300, the song ID may then be compared a storage (e.g., memory) containing e.g. a database of known song IDs.

In alternative embodiments, the song ID may be embodied as an audio fingerprint and audio fingerprinting techniques may be advantageously utilized to produce or otherwise create the audio fingerprint (song ID). Audio fingerprinting, in the context of identifying the song ID in accordance with this disclosure, refers to the process of capturing an audio sample of a song that is being played and converting the audio sample into a fingerprint, which thus uniquely identifies the song being played. The audio fingerprinting *per* se may be performed in various ways. As one mere example, the audio fingerprinting may be performed in accordance with any one of the techniques described in the U.S. Patent No. 8,492,633 B2., entitled "Musical Fingerprinting". When the identified audio fingerprint (song ID) is communicated to the computer server system 300, the audio fingerprint (song ID) may then be compared a storage (e.g., memory) containing e.g. a database of known audio fingerprints (song IDs).

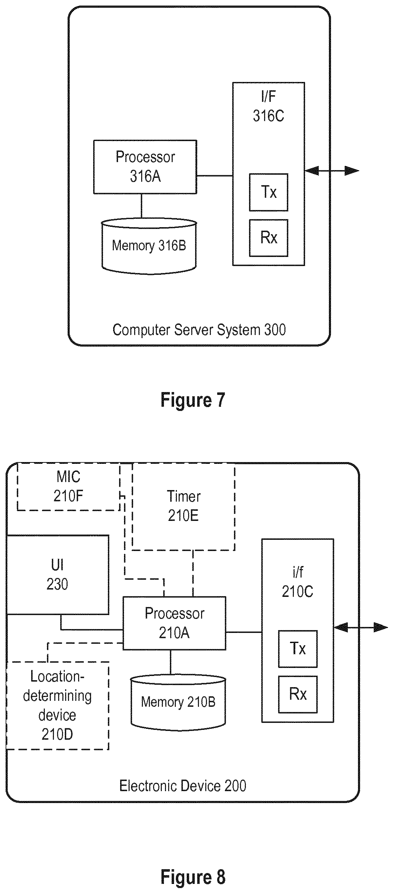

Action 420: Optionally, a time stamp associated with the song ID may be obtained or otherwise identified. As described earlier, the time stamp is indicative of a time when a song having the obtained song ID was played or is being played. The time stamp may include at least one of a starting time and an ending time. The starting time is indicative of the timing when the song associated with the obtained song ID started. Furthermore, the ending time is indicative of the timing when the song associated with the obtained song ID ended or otherwise ceased to play. The starting time and/or the ending time may, in some embodiments, be recorded by the electronic device 200. For example, a timer 210E (see Fig. 8) or timer functionality of the electronic device 200 may be configured to record the starting time and/or the ending time and, accordingly, obtain the time stamp.

Action 430: In advantageous embodiments, location information may also be obtained. The location information may be pertained to the location, or position, of the electronic device 200. Accordingly, the location information may include position coordinates of the electronic device. As is appreciated, position coordinates and thus location information can be obtained in many different ways. In some embodiments, the electronic device 200 may include a positioning device 210D (e.g., a Global Positioning System (GPS) device) or positioning functionality configured to determine the position coordinates, and thus the location, of the electronic device 200. In some embodiments, position coordinates and thus location information associated with the electronic device 200 may be determined by measuring received signal strengths from transmitters (e.g., access points) utilizing known locations and trilateration positioning. In some embodiments, position coordinates and thus location information related to the electronic device may be determined using any commercially available geo-location service. In some embodiments, the discussed ways of determining the location information could be combined.

Action 440: In some embodiments, the song ID, the time associated with the song ID and/or the location information determined in actions 410, 420 and 430, respectively, may be communicated (e.g., transmitted) to the computer server system 300. In some embodiments, a first data message is generated or otherwise created, wherein the first data message comprises said song ID, said time stamp associated with the song ID and/or the location information. The first data message may then be communicated (e.g., transmitted) to the computer server system 300 (see Fig. 1).

Action 450: In some embodiments, an explicit instruction is communicated (e.g., transmitted) to the computer server system 300 for requesting the computer server system to return context affiliation information related to a song. To this end, and in accordance with some embodiments, a second data message may be generated or otherwise created. For example, the second data message may be generated to include an instruction requesting the computer server system 300 to return context affiliation information associated with a selected song to the electronic device 200. Alternatively, the second data message may be generated to include an instruction requesting the computer server system 300 to return context affiliation information associated with a currently played song to the electronic device 200. The second data message may then be communicated (e.g., transmitted) to the computer server system 300 (see Fig. 1).

In some embodiments, actions 430 and 440 may advantageously be combined into one action or method step. A third data message may for example be generated or otherwise created. The third data message may be generated to include a song ID, a time stamp associated with the song ID and an instruction requesting the computer server system 300 to return context affiliation information associated with a selected song or a currently played song being associated with the song ID. The third data message may then be communicated (e.g., transmitted) to the computer server system 300 (see Fig. 1). If location information has been obtained or otherwise determined in an action 430, such location information could also be advantageously appended to or comprised in the third data message.

Action 460: A context affiliation ID is obtained (e.g., received) from the computer server system 300 (see Fig. 1). The context affiliation ID is indicative of a context affiliation related to a song. In advantageous embodiments, the context affiliation ID may include a playlist ID which is indicative of a playlist associated with the song. For example, the playlist ID may identify a playlist from which a selected song or a currently played song is played.

The various embodiments of the method described in connection with Fig. 4 allow for a novel way of consuming media content such as streamed media content. In particular, the various embodiments allow for obtaining or otherwise receiving context affiliation information such as playlist information related to a song at an electronic device 200.

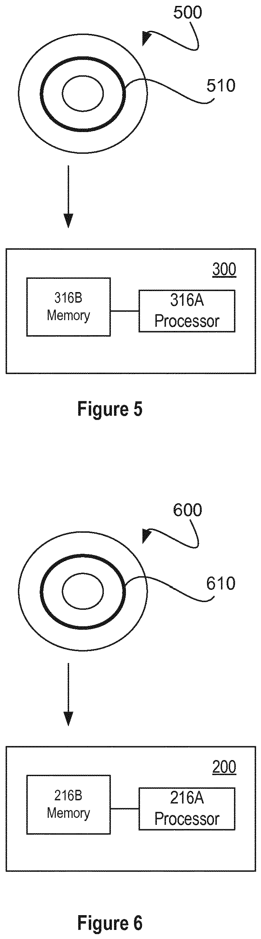

Turning now to Fig. 5, another aspect will be briefly discussed. Fig. 5 shows an example of a computer-readable medium, in this example in the form of a data disc 500. In one embodiment, the data disc 500 is a magnetic data storage disc. The data disc 500 is configured to carry instructions 510 that can be loaded into a data storage (e.g., memory) of an apparatus. Upon execution of said instructions by a processor of the apparatus, the apparatus is caused to execute a method or procedure according to any one of the embodiments described in conjunction with Figs. 2 and 3A-3B. The data disc 500 is arranged to be connected to or within and read by a reading device (not shown), for loading the instructions into the processor. One such example of a reading device in combination with one (or several) data disc(s) 500 is a hard drive. It should be noted that the computer-readable medium can also be other mediums such as compact discs, digital video discs, flash memories or other memory technologies commonly used. In such an embodiment, the data disc 500 is one type of a tangible computer-readable medium. The instructions may alternatively be downloaded to a computer data reading device, such as a computer or other electronic device capable of reading computer coded data on a computer-readable medium, by comprising the instructions in a computer-readable signal (not shown) which is transmitted via a wireless (or wired) interface (for example via the Internet) to the computer data reading device for loading the instructions into a processor of the apparatus. In such an embodiment, the computer-readable signal is one type of a non-tangible computer-readable medium.

Turning now to Fig. 6, another aspect will be briefly discussed. Fig. 6 shows an example of a computer-readable medium, in this example in the form of a data disc 600. In one embodiment, the data disc 600 is a magnetic data storage disc. The data disc 600 is configured to carry instructions 610 that can be loaded into a data storage (e.g., memory) of an apparatus. Upon execution of said instructions by a processor of the apparatus, the apparatus is caused to execute a method or procedure according to any one of the embodiments described in conjunction with Fig. 4. The data disc 600 is arranged to be connected to or within and read by a reading device (not shown), for loading the instructions into the processor. One such example of a reading device in combination with one (or several) data disc(s) 600 is a hard drive. It should be noted that the computer-readable medium can also be other mediums such as compact discs, digital video discs, flash memories or other memory technologies commonly used. In such an embodiment, the data disc 600 is one type of a tangible computer-readable medium. The instructions may alternatively be downloaded to a computer data reading device, such as a computer or other electronic device capable of reading computer coded data on a computer-readable medium, by comprising the instructions in a computer-readable signal (not shown) which is transmitted via a wireless (or wired) interface (for example via the Internet) to the computer data reading device for loading the instructions into a processor of the apparatus. In such an embodiment, the computer-readable signal is one type of a non-tangible computer-readable medium.

With reference to Fig. 7, an example implementation of the computer server system 300 of Fig. 1 will be described in some further detail. For example, the computer server system 300 shown in Fig. 1 may comprise one or several computer servers, as described earlier. In some embodiments, the computer server system 300 may comprise means adapted to perform the methods described herein with reference to Figs. 2 and 3A-3B.

For example, the computer server system 300 may comprise means adapted to obtain a song ID of a song; means adapted to obtain a time stamp associated with the song ID, the time stamp being indicative of a time when a song having the obtained song ID was played or is being played; means adapted to browse a storage, utilizing the obtained song ID as well as the obtained time stamp, to locate a matching item having a corresponding song ID and a corresponding time stamp; and means adapted to determine a context affiliation ID associated with the located matched item in response to locating a matching item, the context affiliation ID being indicative of a context affiliation related to the located matched item; and means adapted to communicate the determined context affiliation ID to said electronic device for enabling subsequent presentation by the electronic device of information related to the context affiliation.

As described earlier, the context affiliation ID may include a playlist ID being indicative of a playlist associated with the matched item.

Furthermore, the time stamp may include at least one of a starting time and an ending time. The starting time may be indicative of the timing when the song associated with the obtained song ID started. The ending time may be indicative of the timing when the song associated with the obtained song ID ended or otherwise ceased to play.

In some embodiments, the computer server system 300 may additionally comprise means adapted to obtain (e.g. receive) location information indicative of the location where the song having the obtained song ID and the obtained time stamp was played or is being played. Furthermore, the means adapted to browse the storage may be further adapted to additionally utilize the obtained location information to locate the matching item.

In some embodiments, the computer server system 300 may comprise means adapted to receive a first data message from the electronic device, the first data message comprising the song ID and the time stamp associated with the song ID. Furthermore, the computer server system 300 may comprise means adapted to retrieve the song ID from the received first data message; and means adapted to retrieve the time stamp associated with the song ID from the received first data message.

In some embodiments, the computer server system 300 may comprise means adapted to receive a second data message from the electronic device, the second data message including an instruction requesting the computer server system to return context affiliation information associated with a selected song to the electronic device.

In some embodiments, the computer server system 300 may comprise means adapted to receive a second data message from the electronic device, the second data message including an instruction requesting the computer server system to return context affiliation information associated with a currently played song to the electronic device.

In some embodiments, the computer server system 300 may comprise means adapted to receive a third data message from the electronic device, the third data message comprising the song ID, the time stamp associated with the song ID and an instruction requesting the computer server system to return context affiliation information associated with a selected song or a currently played song being associated with the song ID to the electronic device. The computer server system 300 may comprise means adapted to retrieve the song ID from the received third data message. Furthermore, the computer server system 300 may comprise means adapted to retrieve the time stamp from the received third data message.

More specifically, Fig. 7 schematically illustrates one example implementation of a computer server system 300, here exemplified by a single computer server in order to ease the understanding of the disclosure. The computer server 300 shown in Fig. 7 is configured to execute, or otherwise perform, the methods described throughout this disclosure with reference to Figs. 2 and 3A-3B. As is schematically illustrated in Fig. 7, the computer server system 300 comprises hardware 316. For example, the computer server system 300 may comprise one or more processors 316A and one or more memories 316B. Also, a communications interface 316C, or a communications circuitry, may be provided in order to allow the computer server system 300 to communicate with electronic devices 200 and/or other computer server systems 300, e.g. via a network 400 such as the Internet. To this end, the communications interface 316C may comprise a transmitter (Tx) and a receiver (Rx). Alternatively, the communications interface 316C may comprise a transceiver (Tx/Rx) combining both transmission and reception capabilities. The communications interface 316C may include a radio frequency (RF) interface allowing the computer server 300 to communicate with electronic devices 200 and/or other computer servers 300 through a radio frequency band through the use of different radio frequency technologies such as 5G New Radio, LTE (Long Term Evolution), WCDMA (Wideband Code Division Multiple Access), or any other cellular network standardized by the 3rd Generation Partnership Project (3GPP), or any other wireless technology such as Wi-Fi, Bluetooth®, etcetera. As described with reference to Fig. 1, the computer server system 300 may also comprise one or more applications, e.g. the software application 310 including the media server application 312. The applications are sets of instructions (e.g., computer program code) that when executed by the one or more processors 316A controls the operation of the computer server system 300.

In some implementations, the at least one memory 316B comprises instructions which, when executed on the at least one processor 316A, cause the computer server system 300 to be operative to: obtain a song ID of a song; obtain a time stamp associated with the song ID, the time stamp being indicative of a time when a song having the obtained song ID was played or is being played; browse a storage, utilizing the obtained song ID as well as the obtained time stamp, to locate a matching item having a corresponding song ID and a corresponding time stamp; and in response to locating a matching item determine a context affiliation ID associated with the located matched item, the context affiliation ID being indicative of a context affiliation related to the located matched item; and communicate the determined context affiliation ID to said electronic device for enabling subsequent presentation by the electronic device of information related to the context affiliation.

As described earlier herein, the context affiliation ID may include a playlist ID being indicative of a playlist associated with the matched item.

Again, the time stamp may include at least one of a starting time and an ending time. The starting time may be indicative of the timing when the song associated with the obtained song ID started. The ending time may be indicative of the timing when the song associated with the obtained song ID ended or otherwise ceased to play.

In some embodiments, the at least one memory 316B comprises instructions which, when executed on the at least one processor 316A, cause the computer server system 300 to be further operative to obtain location information indicative of the location where the song having the obtained song ID and the obtained time stamp was played or is being played; wherein the browsing of the storage additionally includes utilizing the obtained location information to locate the matching item.

In some embodiments, the at least one memory 316B comprises instructions which, when executed on the at least one processor 316A, cause the computer server system 300 to be further operative to receive a first data message from the electronic device 200 via the communications interface 316C, the first data message comprising the song ID and the time stamp associated with the song ID. The at least one memory 316B may comprise instructions which, when executed on the at least one processor 316A, cause the computer server system 300 to be further operative to obtain the song ID by retrieving the song ID from the received first data message and to obtain the time stamp associated with the song ID by retrieving the time stamp from the received first data message.

In some embodiments, the at least one memory 316B comprises instructions which, when executed on the at least one processor 316A, cause the computer server system 300 to be further operative to receive a second data message from the electronic device 200 via the communications interface 316C, the second data message including an instruction requesting the computer server system to return context affiliation information associated with a selected song to the electronic device.

In some embodiments, the at least one memory 316B comprises instructions which, when executed on the at least one processor 316A, cause the computer server system 300 to be further operative to receive a second data message from the electronic device 200 via the communications interface 316C, the second data message including an instruction requesting the computer server system to return context affiliation information associated with a currently played song to the electronic device.

In some embodiments, the at least one memory 316B comprises instructions which, when executed on the at least one processor 316A, cause the computer server system 300 to be further operative to receive a third data message from the electronic device 200 via the communications interface 316C, the third data message comprising the song ID, the time stamp associated with the song ID and an instruction requesting the computer server system to return context affiliation information associated with a selected song or a currently played song being associated with the song ID to the electronic device. The at least one memory 316B may comprise instructions which, when executed on the at least one processor 316A, cause the computer server system 300 to be further operative to obtain the song ID by retrieving the song ID from the received third data message and to obtain the time stamp associated with the song ID by retrieving the time stamp from the received third data message.

With reference to Fig. 8, an example implementation of the electronic device 200 of Fig. 1 will be described in some further detail. In some embodiments, the electronic device 200 may comprise means adapted to perform the method described herein with reference to Fig. 4. For example, the electronic device 200 may comprise means adapted to obtain or identify a song ID. The electronic device 200 may additionally comprise means adapted to obtain a time stamp associated with said song ID. Optionally, the electronic device 200 may also comprise means adapted to obtain location information. The electronic device 200 may also comprise means adapted to communicate (e.g. transmit) said song ID, said time stamp and/or said location information to a computer server system. Additionally, or alternatively, the electronic device 200 may also comprise means adapted to communicate (e.g. transmit) an instruction (to the computer server system 300) to return context affiliation information associated with a selected song or a currently played song being associated with the song ID. Finally, the electronic device 200 comprises means adapted to obtain (e.g., receive) a context affiliation ID from a computer server system 300, the context affiliation ID being indicative of a context affiliation related to a song. Again, the context affiliation ID may advantageously include a playlist ID being indicative of a playlist associated with the song.

Fig. 8 illustrates an example implementation of the electronic device 200. Again, the electronic device 200 may be a portable communication device (e.g., a cellular telephone, a smart phone, a tablet computer, or the like).The electronic device 200 is configured to execute, or otherwise perform, the method described with respect to Fig. 4. As is schematically illustrated in Fig. 8, the electronic device 200 comprises hardware resources 210A-E. For example, the electronic device 200 may comprise one or more processors 210A and one or more memories 210B. Also, a communications interface 210C may be provided in order to allow the electronic device 200 to communicate with other electronic devices and/or computer server systems 300, e.g. via a network 400 such as the Internet. To this end, the communications interface 210C may comprise a transmitter (Tx) and a receiver (Rx). Alternatively, the communications interface 210C may comprise a transceiver (Tx/Rx) combining both transmission and reception capabilities. The communications interface 210C may include a radio frequency (RF) interface allowing the electronic device 200 to communicate with other devices and/or computer server systems 300 through a radio frequency band through the use of different radio frequency technologies such as 5G New Radio, LTE (Long Term Evolution), WCDMA (Wideband Code Division Multiple Access), any other cellular network standardized by the 3rd Generation Partnership Project (3GPP), or any other wireless technology such as Wi-Fi, Bluetooth®, etcetera. The electronic device 200 may further comprise a user interface 230, as described earlier herein. The user interface 230 may advantageously include a touch-sensitive display. As such, the touch-sensitive display may be a touch screen display upon which virtual keys may be displayed and operated. Furthermore, the user interface 230 may include output means such as loudspeakers (not shown). Also, the electronic device may optionally comprise a location-determining device 210D, such as a positioning device (e.g. a GPS device) for determining a position and hence the location of the electronic device 200. Furthermore, the electronic device 200 may comprise a timer 210E as described earlier herein. Still further, an audio recording device (e.g., a microphone 210F) or audio-recording functionality may be provided for recording audio. Also, and as described with reference to Fig. 1, the electronic device 200 may comprise one or more applications, e.g. the media playback application 220. The applications may include sets of instructions (e.g., computer program code) that when executed by the one or more processors 210A controls the operation of the electronic device 200.

In some implementations, the at least one memory 210B comprises instructions which, when executed on the at least one processor 210A, cause the electronic device 200 to obtain (e.g., receive) a context affiliation ID from a computer server system, the context affiliation ID being indicative of a context affiliation related to a song. For example, the context affiliation ID may advantageously include a playlist ID being indicative of a playlist associated with the song.

In some implementations, the at least one memory 210B may advantageously comprise instructions which, when executed on the at least one processor 210A, cause the electronic device 200 to i) obtain or identify a song ID; ii) obtain a time stamp associated with said song ID (e.g., utilizing timer 210E), iii) obtain location information (e.g., via location-determination device 210D), iv) communicate (e.g. transmit via the communications interface 210C) said song ID, said time stamp and/or said location information to a computer server system 300, and/or v) communicate (e.g. transmit via the communications interface 210C) an instruction (to the computer server system 300) to return context affiliation information associated with a selected song or a currently played song being associated with the song ID.

As discussed hereinabove, the various aspects and embodiments described herein allow for a novel way of consuming media content such as streamed media content. In particular, the various aspects and embodiments described herein allow for the provision of context affiliation information (e.g., playlist information) to an electronic device 200, which can be interacted with and operated by a user 500.

In order to ease the understanding of certain example advantages of the aspects and embodiments described herein, the following discussion will describe a number of possible use case scenarios where aspects and embodiments described herein could be applied. To this end, reference is again made to Fig. 1.

In one example scenario, the user 500 is visiting a party or a dinner where music is being played at one or more loudspeaker devices (not shown in Fig. 1). The one or more loudspeakers are separate and distinct from the electronic device 200 and the computer server system 300, respectively. The user 500 finds a song that is currently being played particularly appealing. The user 500 may know the title of the song and the artist of the song. However, the user 500 may also want to know the playlist (context) from which this song is being played, for example, because the user 500 might be interested in knowing if this playlist (context) includes additional songs that the user 500 may find appealing. The user 500 may interact with the UI 230 of his/her electronic device 200 (here exemplified by a portable communication device) to operate the electronic device 200 to record an audio sample of the currently played song. To this end, a microphone 210 F (see Fig. 8) or similar of the electronic device 200 may be utilized and configured to record the audio sample. A starting time and/or an ending time of the recorded audio sample may also be identified, e.g. by means of timer 210E (see Fig. 8). The starting time and/or an ending time of the recorded audio sample may also be stored or otherwise appended to the recorded audio sample. The starting time and/or ending time may thus represent a time stamp of when the currently played song is being played. As described earlier, the recorded audio sample may be converted into an audio fingerprint, e.g., utilizing audio fingerprinting technologies. This way, a song ID (audio fingerprint) may be created in order to uniquely identify the song that is being played at the party (or, dinner). The user 500 may continue interacting and operating his/her electronic device 200 to communicate the song ID and the time stamp associated with said song ID to the computer server system 300. Based on the received song ID and the associated time stamp, the computer server system 300 may browse a storage to locate a matching item (i.e., a matching song ID (audio fingerprint) in this example) having a corresponding song ID and a corresponding time stamp. In response to locating a matching item, the computer server system 300 may determine a context affiliation ID associated with the located matched item, the context affiliation ID being indicative of a context affiliation related to the located matched item. In this example, the context affiliation ID includes a playlist ID being indicative of a playlist associated with the matched item. The determined context affiliation ID may be communicated to said electronic device 200 for enabling subsequent presentation by the electronic device 200 of information related to the context affiliation. In this example, the determined playlist ID may be communicated to said electronic device 200 for enabling subsequent presentation by the electronic device of the playlist information related to the played song. Hereby, it is enabled to provide context affiliation information (e.g., playlist information) or feedback to the electronic device 200. By continuing his/her interaction with the UI 230 of the electronic device 200, the user 500 may thus be informed about the playlist (context) related to the song that was or is being played at the party (or, dinner) attended by the user 500.

In another example scenario, the user 500 is playing a song at the electronic device 200. For example, the user 500 may interact with and operate the UI 230 to play songs from a playlist provided by a music streaming service such as SPOTIFY. In some embodiments, the playback of the song may be through the loudspeaker (not shown) of the electronic device 200. Alternatively, the playback of the song may be through a pair of headphones (not shown) that is connected to the electronic device 200 either via a wired connection or via a wireless connection (e.g., BLUETOOTH). In some embodiments, the playback of a song may be through loudspeaker devices that are external to the electronic device. For example, the electronic device 200 may be capable of remotely controlling one or more loudspeaker devices. To this end, the electronic device 200 may for example implement, or otherwise utilize, any of the techniques described in European Patent Specification EP 2 868 060 B1. For example, it is possible for the user 500 of the electronic device 200 to remotely control the playback of audio content, e.g. songs, at any one or a combination of the loudspeaker devices. The user 500 may find a song that is currently being played particularly appealing. The user 500 may know the title of the song and the artist of the song. However, the user 500 may also want to know the playlist (context) from which this song is being played, for example, because the user 500 might be interested in knowing if this playlist (context) includes additional songs that the user 500 may find appealing. The user 500 may interact with the UI 230 of his/her electronic device 200 to operate the electronic device 200 to request context affiliation information (e.g., playlist information feedback). For example, selecting a particular option at the UI 230 may be used, or otherwise interpreted, as a request or instruction to the media server application 312 of the computer server system 300 to return context affiliation information (e.g., context affiliation feedback) associated with a selected song or a currently played song being associated with a particular song ID. The song ID uniquely identifies the song that is being played or the selected song. The song ID may, in some embodiments, be appended as metadata to the song in question. A timer 210E or timer functionality may also be configured to determine and store a time stamp associated with the song having said song ID. As described earlier, the time stamp may include at least one of a starting time and/or an ending time of the song having said song ID song is being played. The user 500 may thus interact and operate his/her electronic device 200 to communicate the song ID and the time stamp associated with said song ID to the computer server system 300. Based on the received song ID and the associated time stamp, the computer server system 300 may browse a storage to locate a matching item, i.e. a matching song ID and a corresponding matching time stamp. In response to locating a matching item, the computer server system 300 may determine a context affiliation ID associated with the located matched item, the context affiliation ID being indicative of a context affiliation related to the located matched item. In this example, the context affiliation ID includes a playlist ID being indicative of a playlist associated with the matched item. The determined context affiliation ID may be communicated to the electronic device 200 for enabling subsequent presentation by the electronic device 200 of information related to the context affiliation. In this example, the determined playlist ID may be communicated to the electronic device 200 for enabling subsequent presentation by the electronic device of the playlist information related to the played song. Hereby, it is enabled to provide context affiliation information (e.g., playlist information) or feedback to the electronic device 200. By continuing his/her interaction with the UI 230 of the electronic device 200, the user 500 may thus be informed about the playlist (context) related to the song that was or is being played.

The present disclosure recognizes the fact that it is possible to return context affiliation information (e.g., playlist information) with relatively high accuracy if the computer server system 300 obtains the song ID and the time stamp associated with this song ID. Furthermore, the storage may be browsed relatively quickly to find or locate a matching item when the computer server system 300 has obtained the song ID and the associated time stamp. In order to improve the accuracy and/or speed for browsing the storage for locating a matching item even further, location information may advantageously also be utilized in addition to the song ID and the time stamp associated with the song ID. Since it is possible to obtain position coordinates and thus location information of the electronic device 200, the search space within the storage to be browsed can be reduced, sometimes considerably. This can contribute to a higher accuracy and/or quicker browsing for locating the matching item. The position coordinates and thus location information is generally speaking of sufficiently good precision in order to locate the relevant matching item. If a certain song is played in many different places around the globe at the same time, it may suffice with coarse location information (e.g. country, rather than geographical area of a country) to achieve the necessary or important reduction of the search space in order to increase the accuracy and/or speed of locating the matching item.

In the detailed description hereinabove, for purposes of explanation and not limitation, specific details are set forth in order to provide a thorough understanding of various aspects and embodiments described in this disclosure. In some instances, detailed descriptions of well-known devices, components, circuits, and methods have been omitted so as not to obscure the description of the embodiments disclosed herein with unnecessary detail. All statements herein reciting principles, aspects, and embodiments disclosed herein, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure. Thus, for example, it will be appreciated that block diagrams herein can represent conceptual views of illustrative circuitry or other functional units embodying the principles of the described embodiments. Similarly, it will be appreciated that any flow charts and the like represent various processes which may be substantially represented in computer readable medium and so executed by a computer or processor, whether or not such computer or processor is explicitly shown. The functions of the various elements including functional blocks, may be provided through the use of hardware such as circuit hardware and/or hardware capable of executing software in the form of coded instructions stored on the above-mentioned computer readable medium. Thus, such functions and illustrated functional blocks are to be understood as being either hardware-implemented and/or computer-implemented, and thus machine-implemented. In terms of hardware implementation, the functional blocks may include or encompass, without limitation, digital signal processor (DSP) hardware, reduced instruction set processor, hardware (e.g., digital or analog) circuitry including but not limited to application specific integrated circuit(s) [ASIC], and/or field programmable gate array(s) (FPGA(s)), and (where appropriate) state machines capable of performing such functions. In terms of computer implementation, a computer is generally understood to comprise one or more processors or one or more controllers. When provided by a computer or processor or controller, the functions may be provided by a single dedicated computer or processor or controller, by a single shared computer or processor or controller, or by a plurality of individual computers or processors or controllers, some of which may be shared or distributed. Moreover, use of the term "processor" or "controller" may also be construed to refer to other hardware capable of performing such functions and/or executing software, such as the example hardware recited above.

Modifications and other variants of the described embodiments will come to mind to one skilled in the art having benefit of the teachings presented in the foregoing description and associated drawings. Therefore, it is to be understood that the embodiments are not limited to the specific example embodiments described in this disclosure and that modifications and other variants are intended to be included within the scope of this disclosure. Furthermore, although specific terms may be employed herein, they are used in a generic and descriptive sense only and not for purposes of limitation. Therefore, a person skilled in the art would recognize numerous variations to the described embodiments that would still fall within the scope of the appended claims. As used herein, the terms "comprise/comprises" or "include/includes" do not exclude the presence of other elements or steps. Furthermore, although individual features may be included in different claims, these may possibly advantageously be combined, and the inclusion of different claims does not imply that a combination of features is not feasible and/or advantageous. In addition, singular references do not exclude a plurality.

## Claims

1. A method of providing context affiliation information related to a song to an electronic device, the method being performed by a computer server system comprising one or several computers and the method comprising:
obtaining (210) a song identification, ID, of a song;
obtaining (220) a time stamp associated with the song ID, the time stamp being indicative of a time when a song having the obtained song ID was played or is being played;
browsing (240) a storage, utilizing the obtained song ID as well as the obtained time stamp, to locate a matching item having a corresponding song ID and a corresponding time stamp; and in response to locating a matching item
determining (250) a context affiliation ID associated with the located matched item, the context affiliation ID being indicative of a context affiliation related to the located matched item; and
communicating (260) the determined context affiliation ID to said electronic device for enabling subsequent presentation by the electronic device of information related to the context affiliation.

2. The method according to claim 1, wherein the context affiliation ID includes a playlist ID being indicative of a playlist associated with the matched item.

3. The method according to claim 1 or 2, wherein the time stamp includes at least one of a starting time and an ending time, the starting time being indicative of the timing when the song associated with the obtained song ID started and the ending time being indicative of the timing when the song associated with the obtained song ID ended.

4. The method according to any one of the claims 1-3, further comprising:
obtaining (230) location information indicative of the location where the song having the obtained song ID and the obtained time stamp was played or is being played; and wherein
the browsing (240) of the storage additionally includes utilizing the obtained location information to locate the matching item.

5. The method according to any one of the claims 1-4, further comprising:
receiving (310) a first data message from the electronic device, the first data message comprising the song ID and the time stamp associated with the song ID; and wherein
obtaining (220) the song ID includes retrieving (222) the song ID from the received first data message; and
obtaining (220) the time stamp associated with the song ID includes retrieving (224) the time stamp from the received first data message.

6. The method according to any one of the claims 1-5, further comprising:
receiving (320) a second data message from the electronic device, the second data message including an instruction requesting the computer server system to return context affiliation information associated with a selected song to the electronic device.

7. The method according to any one of the claims 1-5, further comprising:
receiving (320) a second data message from the electronic device, the second data message including an instruction requesting the computer server system to return context affiliation information associated with a currently played song to the electronic device.

8. The method according to any one of the claims 1-4, further comprising:
receiving (330) a third data message from the electronic device, the third data message comprising the song ID, the time stamp associated with the song ID and an instruction requesting the computer server system to return context affiliation information associated with a selected song or a currently played song being associated with the song ID to the electronic device; and wherein
obtaining (220) the song ID includes retrieving (226) the song ID from the received third data message; and
obtaining (220) the time stamp associated with the song ID includes retrieving (228) the time stamp from the received third data message.

9. Computer program, comprising instructions (510) which, when executed on at least one processor (316A), cause the at least one processor (316A) to carry out the method according to any one of the claims 1-8.

10. A carrier comprising the computer program according to claim 9, wherein the carrier is one of an electronic signal, an optical signal, a radio signal or computer-readable storage medium (500).

11. A computer server system (300), comprising:
at least one communications interface (316C) for communicating data messages to/from the computer server system (300);
at least one processor (316A); and
at least one memory (316B) comprising instructions which, when executed on the at least one processor (316A), cause the at least one processor (316A) to carry out the method according to any one of the claims 1-8.

12. A method of receiving context affiliation information related to a song, the method being performed by an electronic device and the method comprising:
receiving (460) a context affiliation ID from a computer server system, the context affiliation ID being indicative of a context affiliation related to a song.

13. The method according to claim 12, wherein the context affiliation ID includes a playlist ID being indicative of a playlist associated with the song.

14. The method according to claim 12 or 13, comprising:
communicating (440) a third data message to the computer system, the third data message comprising a song ID, a time stamp associated with the song ID and an instruction requesting the computer server system to return context affiliation information associated with a selected song or a currently played song being associated with the song ID.

15. An electronic device (200), comprising:
at least one communications interface (210C) for communicating data messages to/from the electronic device (200);
at least one processor (210A) and
at least one memory (210B) comprising instructions which, when executed on the at least one processor (210A), cause the at least one processor (210A) to carry out the method according to any one of the claims 12-14.
